# EUROPÄISCHE PATENTSCHRIFT

(11) **EP 2 156 994 B1**
(45) Veröffentlichungstag und Bekanntmachung des Hinweises auf die Patenterteilung: **12.09.2012**
(21) Anmeldenummer: 08014649.1
(22) Anmeldetag: 18.08.2008
(51) Int. Cl.: B60R 21/23, B60R 21/217

(54) **Luftsackanordnung**
Air bag assembly
Ensemble de sac gonflable

(43) Veröffentlichungstag der Anmeldung: 24.02.2010
(73) Patentinhaber: Autoliv Development AB, 447 83 Vårgårda (SE)
(72) Erfinder: Guthke, Detlev, 58089 Hagen (DE); Maiwald, Helmut, 51515 Kürten (DE)
(74) Vertreter: Schön, Thilo

(56) Entgegenhaltungen:
- WO-A-03/080401
- DE-A1- 4 317 740
- US-A- 5 064 218
- US-A1- 2005 134 022

## Beschreibung

Die Erfindung betrifft eine Luftsackanordnung für Kraftfahrzeuge mit wenigstens einem aufblasbaren Luftsack und zumindest einem Gasgenerator zum Aufblasen des Luftsacks, wobei der Gasgenerator innerhalb des Luftsacks angeordnet ist und mit einem Funktionsabschnitt, insbesondere einem elektrischen Anschlussabschnitt, aus dem Luftsack heraus ragt. Die Erfindung betrifft außerdem ein Verfahren zur Herstellung einer Dichtungsanordnung an einer Hülle eines Luftsacks für Kraftfahrzeuge.

Derartige Luftsackanordnungen sind grundsätzlich bekannt.

Die Anordnung des zum Aufblasen des Luftsacks vorgesehenen Gasgenerators innerhalb des Luftsacks bzw. der den Luftsack bildenden Gewebehülle ist beispielsweise bei Seitenairbags vorgesehen.

Zum Auslösen des Gasgenerators wird dieser mit einem elektrischen Signal beaufschlagt, so dass eine Möglichkeit vorgesehen sein muss, an den Gasgenerator Signalleitungen anzuschließen. Hierzu ist es bekannt, einen im Folgenden auch einfach als Stecker bezeichneten Anschlussabschnitt des Gasgenerators aus dem Luftsack herauszuführen. Zu diesem Zweck ist die Luftsackhülle mit einer Öffnung versehen, durch welche der Stecker aus dem Luftsack heraus nach außen geführt ist. Der Gasgenerator selbst ist beispielsweise im Wesentlichen zylindrisch ausgeführt, wobei der Stecker bzw. Anschlussabschnitt z.B. in radialer Richtung von dem zylindrischen Grundkörper des Gasgenerators absteht. Grundsätzlich sind jedoch auch andere räumliche Konfigurationen von Gasgeneratoren denkbar, die innerhalb der Luftsackhülle angeordnet sind und einen wie auch immer gearteten bzw. einem grundsätzlich beliebigen Zweck dienenden Funktionsabschnitt aufweisen, der von außen zugänglich sein muss und hierzu aus der den Gasgenerator aufnehmenden Luftsackhülle herausgeführt ist.

An derartige Durchführungen von Gasgenerator-Funktionsabschnitten durch die Hülle eines Luftsacks hindurch werden hohe Anforderungen gestellt. Die Durchführung muss beispielsweise über einen Zeitraum von mehreren Sekunden eine ausreichende Gasdichtigkeit aufweisen. Hierbei ist zu berücksichtigen, dass innerhalb einer kurzen Zeitspanne von beispielsweise einigen Millisekunden im Anschluss an die Auslösung des Gasgenerators Spitzendrücke von mehreren Bar, beispielsweise von bis zu 4 Bar, innerhalb des Luftsacks erreicht werden. Die Gasdichtigkeit muss bei derartigen Luftsackinnendrücken gewährleistet sein. Darüber hinaus sollen die Durchführungen kostengünstig, Platz sparend und montagefreundlich sein.

In der gattungsbildenden DE 43 17 740 A1 ist eine Front-Luftsackeinrichtung beschrieben, bei der ein Gasgenerator teilweise innerhalb und teilweise außerhalb des Luftsackes angeordnet ist, also durch eine Öffnung in der Hülle des Luftsacks hindurchtritt. Im Bereich dieser Öffnung ist ein zusätzliches Dichtungselement in Form eines Dichtungstuches vorgesehen und mit dem Luftsack vernäht.

In der US 2005/0134022 A1 ist eine Vorhanggassack-Einheit beschrieben. Hier ragt ein Ausströmrohr des Gasgenerators in den Gassack hinein, wozu der Gassack an seiner Oberkante eine L-förmige Ausstülpung aufweist. Die Verbindung dieser L-förmigen Ausstülpung mit dem Ausströmrohr des Gasgenerators erfolgt mittels einer Schelle, welche das Gassackgewebe der L-förmigen Ausstülpung von außen in radialer Richtung auf das Ausströmrohr drückt. In der US 2005/0134022 A1 wird weiterhin vorgeschlagen, Nähte des Gassackes mittels linienförmiger Verklebungen abzudichten beziehungsweise zu schützen.

Aufgabe der Erfindung ist es, eine Luftsackanordnung der eingangs genannten Art zu schaffen, die es ermöglicht, dass bei der Hindurchführung des Funktionsabschnitts des Gasgenerators durch die Luftsackhülle die vorstehend genannten Anforderungen erfüllt sind, d.h. insbesondere unter den jeweils herrschenden Bedingungen eine ausreichende Gasdichtigkeit gewährleistet ist sowie eine kostengünstige Herstellung, einfache Montage und Platz sparende Anordnung im jeweiligen Kraftfahrzeug erreicht werden kann, und die eine hohe Funktionssicherheit bietet.

Die Lösung dieser Aufgabe erfolgt durch die Merkmale des Anspruchs 1.

Insbesondere ist erfindungsgemäß vorgesehen, dass die Hülle des Luftsacks eine Öffnung aufweist, durch welche der Funktionsabschnitt hindurch nach außen geführt ist, wobei die Luftsackhülle im die Öffnung begrenzenden Randbereich zusätzlich zu dem die Luftsackhülle bildenden Material eine Dichtungsanordnung umfasst, welche die Hindurchführung des Funktionsabschnitts durch die Öffnung der Luftsackhülle abdichtet.

Die Erfindung geht von dem Gedanken aus, einen nachstehend auch einfach als Lochrand bezeichneten, eine in der Luftsackhülle ausgebildete Öffnung, die im Folgenden auch als Primäröffnung bezeichnet wird, begrenzenden Randbereich der Luftsackhülle zu nutzen, um die Hindurchführung des Funktionsabschnitts des Gasgenerators insbesondere radial abzudichten. Dabei ist nicht alleine das die Luftsackhülle bildende Material im Randbereich für die Abdichtung dieser Montageöffnung vorgesehen, sondern es ist eine zusätzliche Dichtungsanordnung vorgesehen, welche die eigentliche Montageöffnung begrenzt und dabei so ausgebildet ist, dass die gewünschte Abdichtwirkung erzielt wird.

Insbesondere ist die Dichtungsanordnung derart ausgebildet, dass der Lochrand, d.h. der Rand der Montageöffnung für den Funktionsabschnitt des Gasgenerators, stabilisiert wird. Hierdurch können die Spannungen, die aufgrund der vorstehend erwähnten hohen anfänglichen Luftsackinnendrücke beim Aufblasen des Luftsacks in der Luftsackhülle im Bereich der Montageöffnung auftreten, aufgenommen werden.

Die Stabilisierung kann durch die Dichtungsanordnung selbst erreicht werden, die somit eine Art Doppelfunktion erfüllt. Alternativ kann zusätzlich zu der Dichtungsanordnung eine Stabilisierungseinrichtung vorgesehen sein, d.h. bei der Dichtungsanordnung und der Stabilisierungseinrichtung kann es sich um separate Einrichtungen handeln, die insbesondere in geeigneter Weise zusammenwirken.

Weiterhin ist wenigstens ein mit dem Funktionsabschnitt des Gasgenerators koppelbarer Niederhalter oder ein mit dem Funktionsabschnitt des Gasgenerator koppelbares Sicherungselement vorgesehen, der bzw. das den die Öffnung begrenzenden Randbereich der Luftsackhülle auf dem Funktionsabschnitt hält, und zwar auch unter beim und nach dem Aufblasen des Luftsacks herrschenden Bedingungen. Durch diese Maßnahme wird verhindert, dass selbst bei relativ hohen Luftsackinnendrücken der Luftsack im Bereich der Montageöffnung vom Gasgenerator wegbewegt, d.h. gewissermaßen außer Eingriff mit dem Funktionsabschnitt "geblasen", wird, wodurch der Funktionsabschnitt des Gasgenerators in das Innere des Luftsacks gelangen würde.

Der Niederhalter bzw. das Sicherungselement ist derart ausgebildet, dass er bzw. es auf den Funktionsabschnitt aufsteckbar oder aufschiebbar und dabei derart ausgebildet ist, dass im aufgesteckten oder aufgeschobenen Zustand ohne zusätzliche Hilfsmittel ein ungewolltes Entfernen des Niederhaltes bzw. des Sicherungselementes vom Funktionsabschnitt unterbunden ist.

Hierzu kann eine entgegen der Aufschiebe- oder Aufsteckrichtung wirksame Selbsthemmung des Niederhalters bzw. des Sicherungselementes vorgesehen sein. Beispielsweise kann der Niederhalter bzw. das Sicherungselement nach Art einer Achsensicherung ausgebildet sein. Der Niederhalter bzw. das Sicherungselement kann beispielsweise federnde Laschen oder Lamellen aufweisen, die in Umfangsrichtung verteilt angeordnet und derart ausgebildet sind, dass in Auf steck- bzw. Aufschieberichtung eine Bewegung des Niederhalters bzw. des Sicherungselementes relativ zum Funktionsabschnitt des Gasgenerators zugelassen wird, eine Bewegung in die entgegengesetzte Richtung aber blockiert ist.

Des Weiteren kann erfindungsgemäß vorgesehen sein, dass zwischen dem Niederhalter bzw. Sicherungselement einerseits und dem die Öffnung begrenzenden Randbereich der Luftsackhülle andererseits wenigstens ein den Funktionsaschnitt zumindest bereichsweise umgebendes Zwischenstück angeordnet ist.

Zum einen kann durch ein derartiges Zwischenstück erreicht werden, dass eine unregelmäßige äußere Gestalt des Funktionsabschnittes zumindest in einem bestimmten Maße durch das Zwischenstück ausgeglichen wird. Das Zwischenstück stellt hierbei gewissermaßen eine Art Adapter zwischen dem Funktionsabschnitt des Gasgenerators und dem die Öffnung begrenzenden Randbereich der Luftsackhülle, also der Dichtungsanordnung, dar. Hierdurch kann erreicht werden, dass die Dichtungsanordnung nicht mehr unmittelbar mit dem Funktionsabschnitt des Gasgenerators, sondern mit dem Zwischenstück zusammenwirkt, um auf diese Weise eine optimale Abdichtwirkung sicherzustellen. Das Zwischenstück kann auf den Funktionsabschnitt aufsteckbar oder aufschiebbar ausgebildet sein.

Zum anderen kann mittels des Zwischenstücks erreicht werden, dass eine Halte-und/oder Abstützwirkung des mittelbar über das Zwischenstück mit dem Randbereich der Luftsackhülle zusammenwirkenden Niederhalters bzw. Sicherungselementes durch das Zwischenstück vergrößert ist.

In einem bevorzugten Ausführungsbeispiel handelt es sich bei der Stabilisierungseinrichtung um einen zusätzlichen Materialabschnitt, der insbesondere als eine ringförmige Lochverstärkung ausgebildet und mit der Luftsackhülle im Bereich der Montageöffnung verklebt ist. Die Dichtungsanordnung wird dabei von dem außerdem diese Verklebung bildenden Klebemittel, beispielsweise Silikon, gebildet, und zwar von einem nicht zum Verkleben von Luftsackhülle und zusätzlichem Materialabschnitt verwendeten Klebemittelüberschuss. Bevorzugt ist dabei das Klebemittel zumindest während des Klebevorgangs oder innerhalb einer bestimmten Zeitspanne im Anschluss an den Klebevorgang zur Bildung der Dichtungsanordnung formbar. Beispielsweise kann die Dichtungsanordnung in Form eines ringförmigen Klebemittelwulstes ausgebildet sein, der die Öffnung begrenzt und radial nach außen in den insbesondere kreisringförmigen Klebebereich übergeht, der sich zwischen der Luftsackhülle und dem zusätzlichen Materialabschnitt befindet und diese miteinander verklebt. Dieser Klebemittel-Dichtwulst entsteht zum Beispiel durch Herausdrücken von überschüssigem Klebemittel aus dem Zwischenraum zwischen Luftsackhülle und zusätzlichen Materialabschnitt während des Klebevorgangs.

Die in diesem Ausführungsbeispiel insofern von einer Verklebung oder einem Klebemittelüberschuss dieser Verklebung gebildete Dichtungsanordnung ist insbesondere ringförmig ausgebildet. In Abhängigkeit von den Abmessungen des Funktionsabschnitts des Gasgenerators ist des Weiteren die Dichtungsanordnung bevorzugt derart ausgebildet, dass sie den Funktionsabschnitt eng umschtießt. Dabei ist insbesondere vorgesehen, dass die Dichtungsanordnung, bevorzugt über den gesamten Umfang des Funktionsabschnitts, eine radial nach innen gerichtete Kraft auf den Funktionsabschnitt ausübt. Die in diesem Ausführungsbeispiel von der Dichtungsanordnung begrenzte Öffnung kann bezüglich des Funktionsabschnitts unterdimensioniert sein, so dass die Dichtungsanordnung beim Hindurchführen des Funktionsabschnitts durch die Öffnung geweitet wird.

Bevorzugt ist die Dichtungsanordnung elastisch verformbar ausgebildet.

Wie bereits erwähnt, kann zur Stabilisierung des die Öffnung begrenzenden Randbereiches die Luftsackhülle zusätzlich zu dem die Luftsackhülle bildenden Material eine Stabilisierungseinrichtung für den Randbereich umfassen, die insbesondere derart ausgelegt ist, dass der Randbereich eine erhöhte Festigkeit und/oder Steifigkeit erhält.

Insbesondere kann der Randbereich aufgrund der Stabilisierungseinrichtung eine vergrößerte Dicke aufweisen.

Die Stabilisierungseinrichtung kann zumindest zum Teil von der Dichtungsanordnung gebildet sein.

Des Weiteren kann vorgesehen sein, dass die Stabilisierungseinrichtung wenigstens einen zusätzlichen, insbesondere als ringförmige Lochverstärkung ausgebildeten Materialabschnitt umfasst, der mit der Luftsackhülle verbunden ist. Insbesondere befindet sich die Stabilisierungseinrichtung auf der Luftsackinnenseite, wobei eine Anordnung auf der Außenseite des Luftsacks ebenfalls möglich ist. Eine Kreisform der Stabilisierungseinrichtung ist nicht zwingend. Möglich ist z.B. auch eine quadratische oder rechteckige Form.

Wie beispielsweise in Verbindung mit der vorstehend erläuterten Ausführungform erwähnt, kann der zusätzliche Materialabschnitt, der zur Stabilisierung des Lochrandes dient, mit der Luftsackhülle verklebt sein.

Das zum Verkleben dieses zusätzlichen Materialabschnitts mit der Luftsackhülle vorgesehene Klebemittel kann gleichzeitig zumindest zum Teil die Dichtungsanordnung bilden, beispielsweise durch Bildung eines ringförmigen Klebemittelwulstes, wie es in dem vorstehend beschriebenen Ausführungsbeispiel der Fall ist.

Als Klebemittel wird beispielsweise Silikon eingesetzt.

Ein bevorzugtes Verfahren zur Herstellung der Dichtungsanordnung ist in Anspruch 13 angegeben.

Bei dem erfindungsgemäßen Verfahren ist vorgesehen, dass in der Luftsackhülle eine Primäröffnung ausgebildet wird, im Bereich der Primäröffnung mit einem Klebemittel eine Verklebung gebildet wird, und während der Bildung der Verklebung oder innerhalb einer bestimmten Zeitspanne im Anschluss an die Bildung der Verklebung aus dem Klebemittel eine insbesondere ringwulstartige Dichtung derart gebildet wird, dass eine innerhalb der Primäröffnung liegende, von der Dichtung begrenzte Öffnung entsteht.

Wie vorstehend bereits erwähnt, kann die Dichtung aus einem zumindest nicht unmittelbar dem Verkleben dienenden Klebemittelüberschuss der Verklebung gebildet werden.

Weitere Ausführungsformen der Erfindung sind auch in den abhängigen Ansprüchen, der Beschreibung sowie der Zeichnung angegeben.

Die Erfindung wird im Folgenden beispielhaft unter Bezugnahme auf die Zeichnung beschrieben. Es zeigen:
- Fig. 1: teilweise ein Ausführungsbeispiel einer erfindungsgemäßen Luftsackanordnung im nicht zusammengesetzten Zustand,
- Fig. 2: die Luftsackanordnung von Fig. 1 im zusammengesetzten Zustand,
- Fig. 3: die Luftsackanordnung von Fig. 2 bei auf Zug beanspruchter Luftsackhülle,
- Fig. 4: ein weiteres Ausführungsbeispiel einer erfindungsgemäßen Luftsackanordnung im zusammengesetzten Zustand,
- Fig. 5: verschiedene Ansichten eines Gasgenerators und eines Niederhalters bzw. Sicherungselementes zur Koppelung mit einem elektrischen Anschlussabschnitt des Gasgenerators, und
- Fig. 6: eine weitere Ausführungsform einer erfindungsgemäßen Luftsackanordnung.

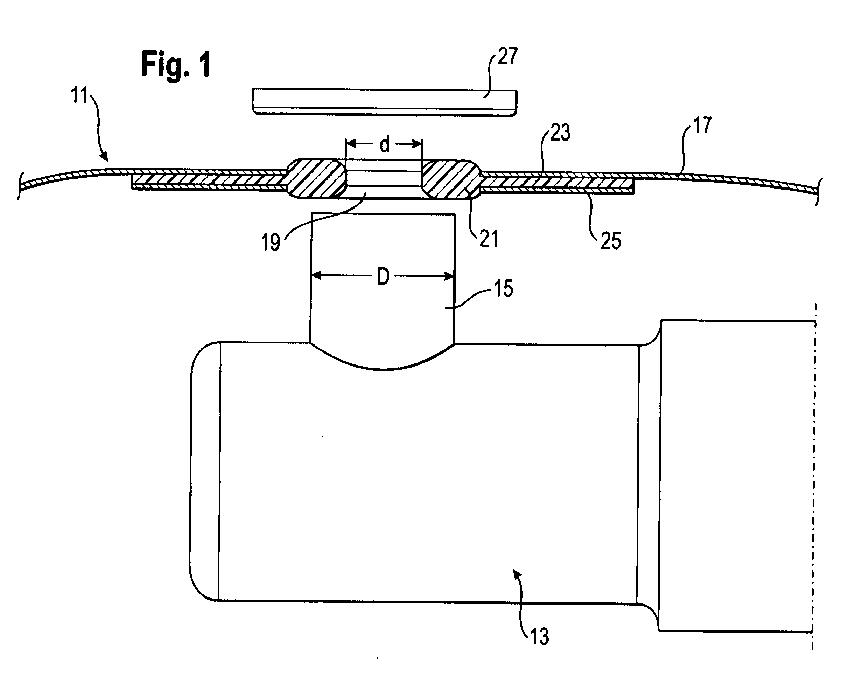

In Fig. 1 ist teilweise ein im Wesentlichen zylindrischer Gasgenerator 13 dargestellt, der einen in radialer Richtung abstehenden, ebenfalls im Wesentlichen zylindrischen Funktionsabschnitt in Form eines im Folgenden auch einfach als Stecker bezeichneten elektrischen Anschlussabschnitts 15 aufweist. Der Stecker 15 dient zur elektrischen Verbindung des Gasgenerators 13 mit einer nicht dargestellten Steuerungseinrichtung durch ebenfalls nicht dargestellte Signalleitungen, über welche dem Gasgenerator 13 ein Signal zugeführt werden kann, um den Gasgenerator 13 auszulösen.

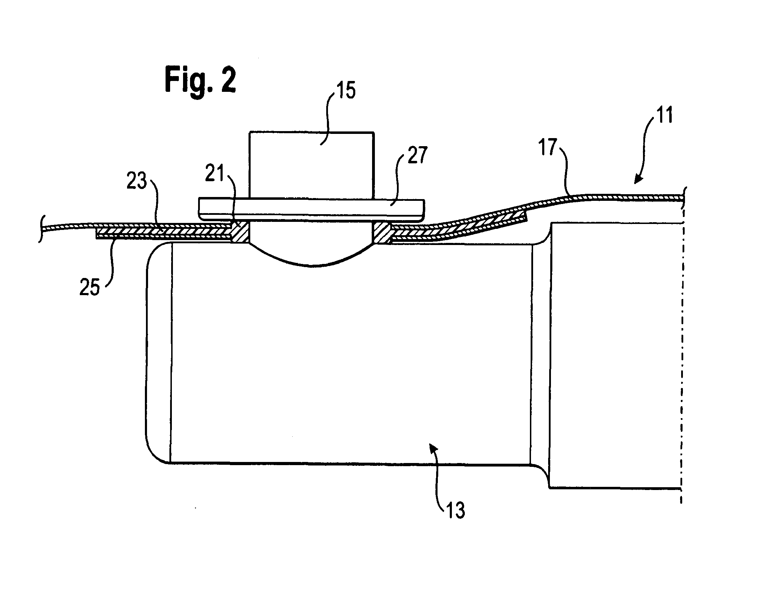

Im zusammengesetzten Zustand gemäß Fig. 2 ist der Gasgenerator 13 innerhalb des Luftsacks 11 angeordnet, von dem hier lediglich ein Teil der Luftsackhülle 17 dargestellt ist. In der Luftsackhülle 17 ist eine beispielsweise im Wesentlichen kreisförmige Primäröffnung ausgebildet, durch welche im zusammengesetzten Zustand (Fig. 2) der Stecker 15 des Gasgenerators 13 nach außen hindurchgeführt ist. Zur Stabilisierung des Randbereiches dieser Primäröffnung ist ein zusätzlicher Materialabschnitt 25 in Form einer kreisringförmigen Lochverstärkung vorgesehen, wobei alternativ z.B. auch ein quadratischer oder rechteckiger Materialabschnitt vorgesehen sein kann. Die Lochverstärkung 25 ist auf der Luftsackinnenseite mit der Luftsackhülle 17 im Bereich der Primäröffnung verklebt, wobei auch eine Anordnung der Lochverstärkung auf der Luftsackaußenseite möglich ist.

Das Verkleben des zusätzlichen Materialabschnitts 25 mit der Luftsackhülle 17 erfolgt durch ein Klebemittel, für welches insbesondere Silikon verwendet wird. Bei der Herstellung dieser Verklebung 23 wird zur Bildung einer innerhalb der Primäröffnung liegenden Öffnung 19 eine Dichtungsanordnung 21 hergestellt, die im Folgenden auch einfach als Dichtung bezeichnet wird. Hierzu wird aus einem Klebemittel-Überschuss ein ringförmiger Dichtwulst mit einem Innendurchmesser d gebildet, der kleiner, insbesondere wesentlich kleiner, als der Außendurchmesser D des Steckers 15 des Gasgenerators 13 ist. Dieser die Dichtung 21 bildende und die Öffnung 19 radial innen begrenzende Dichtwulst entsteht z.B. durch Zusammendrücken der Luftsackhülle 17 und der Lochverstärkung 25, wodurch dazwischen befindliches Klebemittel herausgedrückt wird, aus dem dann in einem Formungsprozess der Dichtwulst 21 gebildet werden kann.

Somit geht die kreisringförmige, relativ dünne Verklebung 23 zwischen der Lochverstärkung 25 und der Luftsackhülle 17 radial in den Dichtringwulst 21 über, der in dem hier dargestellten Ausführungsbeispiel eine Dicke aufweist, die größer ist als die Summe der Dicken der Luftsackhülle 17, der Verklebung 23 und des zusätzlichen Materialabschnitts 25.

Im zusammengesetzten Zustand gemäß Fig. 2 ist der Stecker 15 des Gasgenerators 13 durch die vom Klebemittel-Dichtwulst 21 begrenzte Montageöffnung 19 der Luftsackhülle 17 hindurch nach außen geführt. Der elastisch verformbare Dichtringwulst 21 ist aufgeweitet und in radialer Richtung zusammengedrückt und übt hierdurch eine über den gesamten Umfang des Steckers 15 wirksame radiale Rückstell- bzw. Dichtkraft auf den Stecker 15 aus. Auf diese Weise wird der Stecker 15 von dem Klebemittel-Dichtwulst eng umschlossen, wodurch eine den praktischen Anforderungen gerecht werdende Abdichtwirkung erzielt wird.

Die radial nach innen gerichtete Umschließungskraft des elastisch verformbaren Klebemittel-Dichtwulstes 21 gewährleistet, dass zumindest bis zu bestimmten innerhalb des Luftsacks 11 herrschenden Innendrücken ein Abheben oder "Wegblasen" der Luftsackhülle 17 im Bereich der Montageöffnung vom Stecker 15 des Gasgenerators 13 verhindert wird. Um die Luftsackhülle 17 zusätzlich zu sichern, ist ein im Folgenden auch als Niederhalter bezeichnetes Sicherungselement 27 in Form einer kreisringförmigen Sicherungsscheibe vorgesehen. Der Niederhalter 27 wird auf den Stecker 15 aufgeschoben, so dass die Dichtungsanordnung 21 zwischen dem Gasgenerator 13 und der dem Gasgenerator 13 zugewandten Seite des Niederhalters 27 angeordnet ist. Dabei kann die Dichtungsanordnung 21 in axialer Richtung zusammengedrückt sein, wodurch die Dichtungsanordnung 21 nach einer radialen Ausdehnung strebt und so die Abdichtwirkung weiter erhöht wird. Auf eine mögliche konkrete Ausgestaltung des Niederhalters 27 wird nachstehend näher eingegangen.

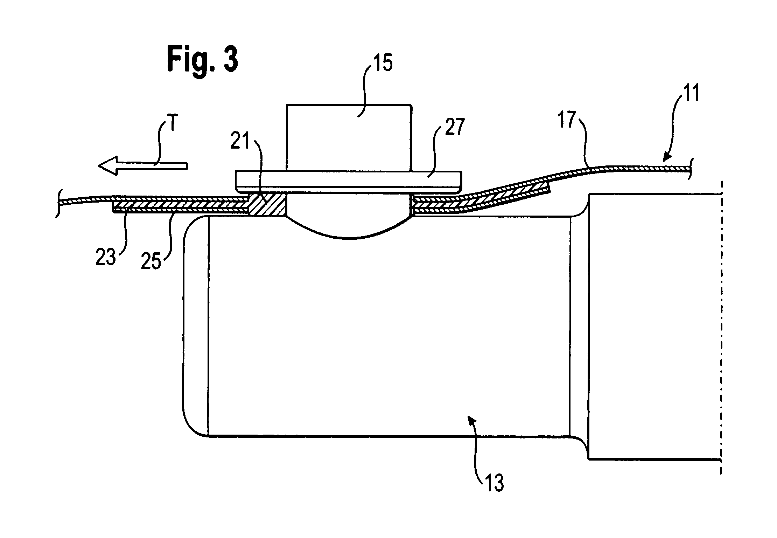

Fig. 3 veranschaulicht, dass die elastische Verformbarkeit der von dem Klebemittel gebildeten Dichtungsanordnung 21 die Gasdichtigkeit der Durchführung des Steckers 15 durch die Montageöffnung 19 der Luftsackhülle 17 auch dann gewährleistet, wenn Relativbewegungen senkrecht zur Axialerstreckung des Steckers 15 zwischen der Luftsackhülle 17 und dem Gasgenerator 13 auftreten. Derartige Relativbewegungen können auftreten, wenn der Luftsack 11 aufgeblasen wird. Der Gasgenerator 13 ist in der Praxis meist ortsfest am Fahrzeug angebracht, wohingegen sich der insofern "schwimmend aufgehängte" Luftsack 11 relativ zum Gasgenerator 13 bewegen kann. Insbesondere kann eine Verschiebung der Luftsackhülle 17 relativ zum Gasgenerator 13 auftreten, wenn der Luftsack 11 aufgeblasen wird und sich infolgedessen die Luftsackhülle 17 dehnt.

Die erfindungsgemäße Dichtung 21 ist in der Lage, diese Relativbewegungen aufzunehmen. Die in Fig. 3 durch einen Pfeil angedeutete Zugkraft T hat auf der einen Seite des Steckers 15 eine Streckung oder Dehnung der Dichtung 21 zur Folge, wohingegen auf der diametral gegenüberliegenden Seite des Steckers 15 eine Komprimierung oder Stauchung der Dichtung 21 erfolgt. Die Gasdichtigkeit der Steckerdurchführung bleibt aufgrund der elastischen Eigenschaften dieser Dichtung 21 aber zu jedem Zeitpunkt erhalten.

Eine nachteilige Dehnung der Luftsackhülle 17 im Bereich der Montageöffnung 19 wird durch die Stabilisierung aufgrund des verklebten zusätzlichen Materialabschnitts 25 verhindert oder zumindest eingeschränkt.

Dieser Materialabschnitt 25 besteht bevorzugt aus dem gleichen Material wie die Luftsackhülle 17, insbesondere einem Gewebematerial. Dabei kann insbesondere eine innerhalb der Gewebestruktur des Materialabschnitts 25 vorhandene Vorzugsrichtung gegenüber einer entsprechenden Vorzugsrichtung der Luftsackhülle 17 verdreht sein, z.B. um 45°.

Die von diesem zusätzlichen Materialabschnitt 25 gebildete Lochverstärkung sorgt auch für eine ausreichende Festigkeit der Luftsackhülle 17 im Bereich der Montageöffnung 19, wodurch erreicht wird, dass sich die Luftsackhülle 17 in optimal gesicherter Weise an dem von der Sicherungsscheibe 27 gebildeten Niederhalter abstützen kann.

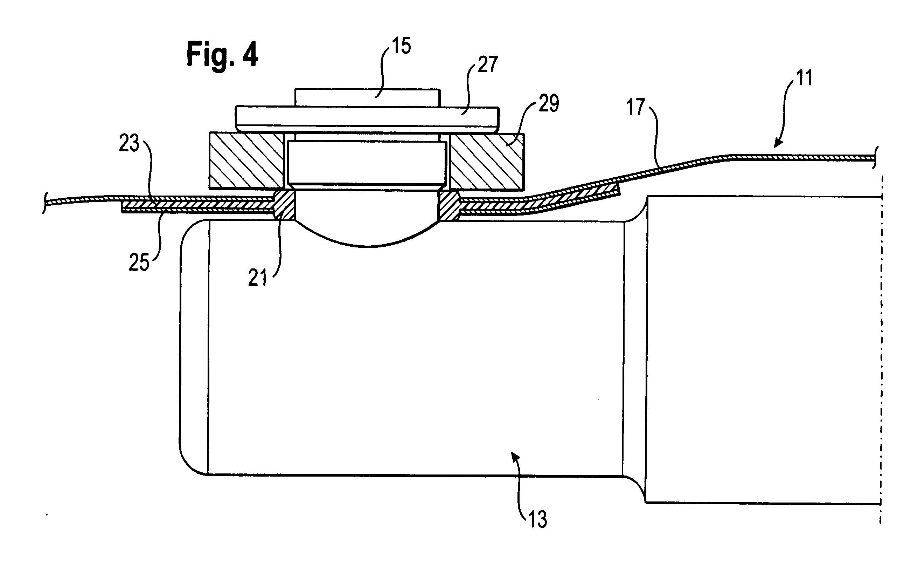

In dem Ausführungsbeispiel der Fig. 4 ist ein zusätzliches Zwischenstück 29 vorgesehen, das ringförmig ausgebildet ist und einen größeren Außendurchmesser aufweist als das Sicherungselement 27. Dieses Zwischenstück 29, das als Druckstück wirken kann, ist in der Lage, Unregelmäßigkeiten in der Geometrie des Steckers 15 auszugleichen, um hierdurch einen sicheren Halteeingriff, insbesondere ein sicheres "Verkrallen", des Sicherungselementes 27 zu erreichen oder zumindest zu unterstützen.

Außerdem führt das Zwischenstück 29 zu einer Vergrößerung der Abstützfläche des Sicherungselementes 27 an der Luftsackhülle 17. Auf diese Weise können größere Relativbewegungen des Luftsacks 11 gegenüber dem Gasgenerator 13 abgefangen werden.

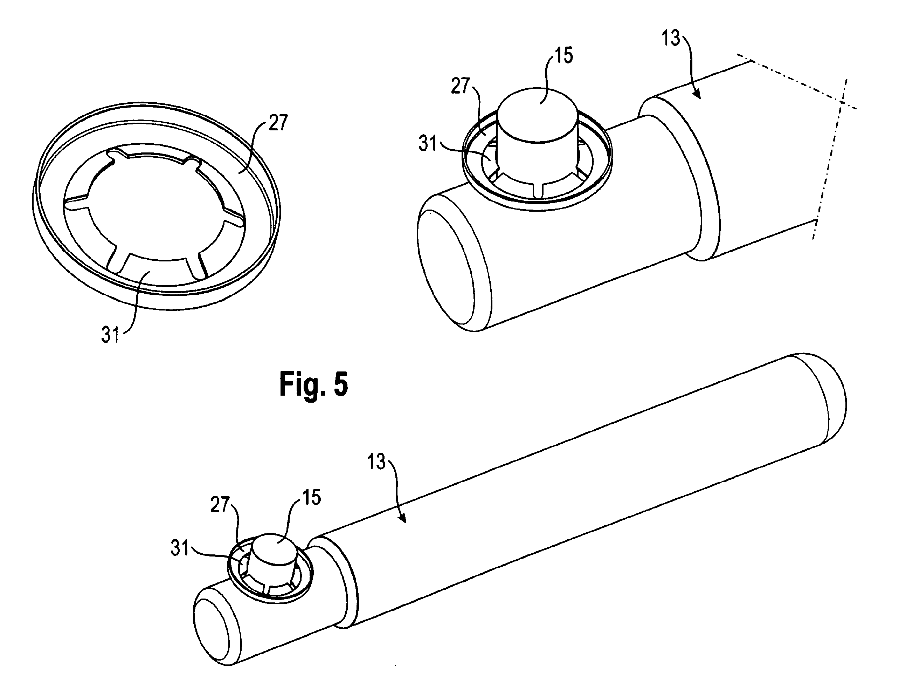

Fig. 5 zeigt insbesondere eine mögliche konkrete Ausgestaltung des Sicherungselementes 27. Dieses ist mit einer Mehrzahl von in Umfangsrichtung verteilt angeordneten, elastisch verformbaren Haltelamellen 31 versehen, die ein Aufschieben dieses Niederhalters 27 auf den Stecker 15 des Gasgenerators 13 ermöglichen, in der entgegengesetzten Richtung aber eine Relativbewegung zwischen Niederhalter 27 und Stecker 15 blockieren. Der in Fig. 5 nicht dargestellte Luftsack 11 ist hierdurch aufgrund des Sicherungselementes 27 gegen ein Abrutschen oder "Wegblasen" vom Stecker 15 des Gasgenerators 13 auch bei hohen Luftsackinnendrücken, wie sie insbesondere zu Beginn des Aufblasvorgangs auftreten, zuverlässig gesichert.

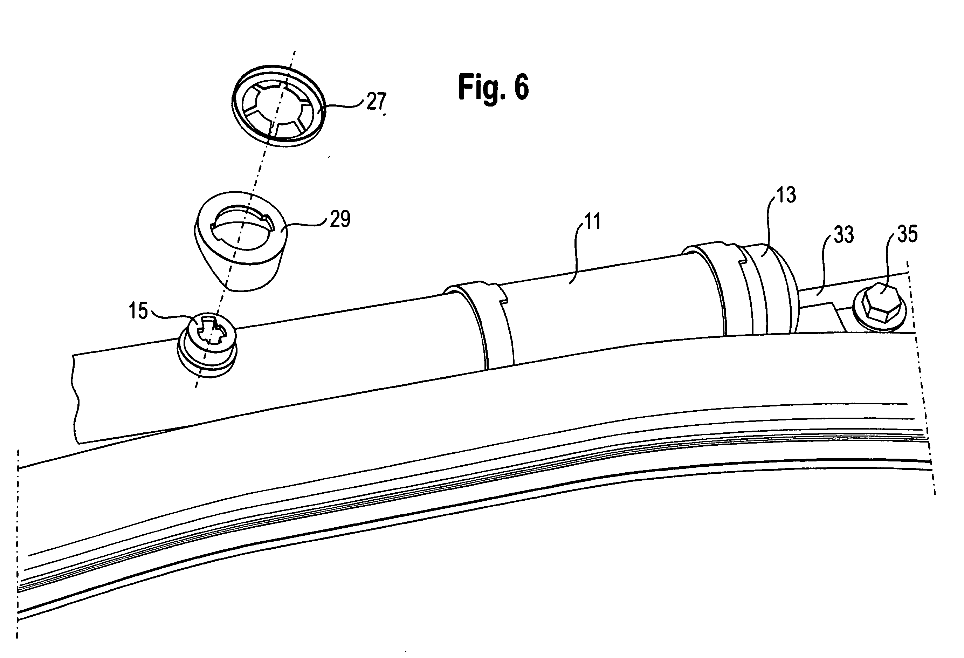

Fig. 6 zeigt eine erfindungsgemäße Luftsackanordnung in einer Montagesituation. Der Gasgenerator 13 ist mit einem Befestigungsabschnitt 33 versehen, über welchen der Gasgenerator 13 mittels einer Befestigungsschraube 35 ortsfest an einem nicht dargestellten Kraftfahrzeug befestigt ist.

Der Gasgenerator 13 ist im Wesentlichen innerhalb eines hier zusammengefaltet dargestellten Luftsacks 11 angeordnet. Mit dem elektrischen Anschlussabschnitt 15 ragt der Gasgenerator 13 aus dem Luftsack 11 heraus. Die Sicherung dieser Montagekonfiguration erfolgt durch das vorstehend in Verbindung mit Fig. 5 beschriebene Sicherungselement 27, wobei hier außerdem ein Zwischenstück 29 vorgesehen ist, über welches das Sicherungselement 27 im zusammengesetzten Zustand mit der Luftsackhülle 17 im Bereich der Hindurchführung des Anschlussabschnitts 15 durch den Luftsack 11 zusammenwirkt.

Generell gilt für alle beschriebenen Ausführungsformen, dass das Sicherungselement 27 in vorteilhafter Weise für eine Ortsfixierung der Dichtung 21 sorgt, also dafür, dass die Dichtung 21 an dem für sie vorgesehenen Ort am Gasgenerator 13 verbleibt.

### Bezugszeichenliste

- 11: Luftsack
- 13: Gasgenerator
- 15: Funktionsabschnitt, Anschlussabschnitt, Stecker
- 17: Luftsackhülle
- 19: Öffnung, Montageöffnung
- 21: Dichtungsanordnung, Dichtung, Klebemittel-Dichtwulst
- 23: Verklebung
- 25: Stabilisierungseinrichtung, zusätzlicher Materialabschnitt, Lochrandverstärkung
- 27: Niederhalter, Sicherungselement
- 29: Zwischenstück
- 31: Lamelle, Lasche
- 33: Befestigungsabschnitt
- 35: Befestigungsschraube

- d: Innendurchmesser der Öffnung
- D: Außendurchmesser des Funktionsabschnitts
- T: Zugrichtung

## Patentansprüche

1. Luftsackanordnung für Kraftfahrzeuge mit:
wenigstens einem aufblasbaren Luftsack (11) und
zumindest einem Gasgenerator (13) zum Aufblasen des Luftsacks (11),
wobei der Gasgenerator (13) innerhalb des Luftsacks (11) angeordnet ist und ein sich vom Gasgenerator erstreckender Funktionsabschnitt (15), insbesondere ein elektrischer Anschlussabschnitt, aus dem Luftsack (11) herausragt,
wobei eine Hülle (17) des Luftsacks (11) eine Öffnung (19) aufweist,
durch welche der Funktionsabschnitt (15) hindurch nach außen geführt ist,
und
wobei die Luftsackhülle (17) im die Öffnung (19) begrenzenden Randbereich zusätzlich zu dem die Luftsackhülle (17) bildenden Material eine Dichtungsanordnung (21) umfasst, welche die Hindurchführung des Funktionsabschnitts (15) durch die Öffnung (19) der Luftsackhülle (17) abdichtet,
**dadurch gekennzeichnet,**
**dass** wenigstens ein mit dem Funktionsabschnitt (15) des Gasgenerators (13) koppelbarer Niederhalter (27) derart vorgesehen ist, dass sich die Dichtungsanordnung (21) in axialer Richtung des Funktronsabschnitts (15) zwischen dem Gasgenerator (13) und dem Niederhalter (27) befindet, wodurch der Niederhalter den die Öffnung (19) begrenzenden Randbereich der Luftsackhülle (17) auch unter beim und nach dem Aufblasen des Luftsacks (11) herrschenden Bedingungen auf dem Funktionsabschnitt (15) hält, wobei insbesondere der Niederhalter (27) auf den Funktionsabschnitt (15) aufsteckbar oder aufschiebbar und derart ausgebildet ist, dass der Niederhalter (27) im aufgesteckten oder aufgeschobenen Zustand ohne zusätzliche Hilfsmittel gegen ein ungewolltes Entfernen vom Funktionsabschnitt (15) gesichert ist.

2. Luftsackanordnung nach Anspruch 1,
**dadurch gekennzeichnet,**
**dass** die Dichtungsanordnung (21) ringförmig ausgebildet ist.

3. Luftsackanordnung nach Anspruch 1 oder 2,
**dadurch gekennzeichnet,**
**dass** die Dichtungsanordnung (21) den Funktionsabschnitt (15) eng umschließend ausgebildet ist.

4. Luftsackanordnung nach einem der vorhergehenden Ansprüche,
**dadurch gekennzeichnet,**
**dass** die Dichtungsanordnung (21), insbesondere über den gesamten Umfang des Funktionsabschnitts (15), eine radial nach innen gerichtete Kraft auf den Funktionsabschnitt (15) ausübt.

5. Luftsackanordnung nach einem der vorhergehenden Ansprüche,
**dadurch gekennzeichnet,**
**dass** die Dichtungsanordnung (21) elastisch verformbar ist.

6. Luftsackanordnung nach einem der vorhergehenden Ansprüche,
**dadurch gekennzeichnet,**
**dass** die Dichtungsanordnung (21) von einem außerdem eine Verklebung (23) bildenden Klebemittel, insbesondere Silikon, gebildet ist, wobei die Dichtungsanordnung (21) und die Verklebung (23) ineinander übergehen, wobei insbesondere die Dichtungsanordnung (21) von einem zumindest nicht unmittelbar dem Verkleben dienen den Klebemittelüberschuss gebildet ist, wobei insbesondere das Klebemittel zumindest während des Klebevorgangs oder innerhalb einer bestimmten Zeitspanne im Anschluss an den Klebevorgang zur Bildung der Dichtungsanordnung (21) formbar ist.

7. Luftsackanordnung nach einem der vorhergehenden Ansprüche,
**dadurch gekennzeichnet,**
**dass** die Luftsackhülle (17) im die Öffnung (19) begrenzenden Randbereich zusätzlich zu dem die Luftsackhülle (17) bildenden Material eine Stabilisierungseinrichtung (25) für den Randbereich umfasst, die insbesondere dem Randbereich eine erhöhte Festigkeit und/oder Steifigkeit verleiht, wobei insbesondere durch die Stabilisierungseinrichtung (25) der Randbereich eine vergrößerte Dicke aufweist.

8. Luftsackanordnung nach Anspruch 7,
**dadurch gekennzeichnet,**
**dass** die Stabilisierungseinrichtung (25) zumindest zum Teil von der Dichtungsanordnung (21) gebildet ist.

9. Luftsackanordnung nach Anspruch 7 oder 8,
**dadurch gekennzeichnet,**
**dass** die Stabilisierungseinrichtung wenigstens einen zusätzlichen, insbesondere als ringförmige Lockverstärkung ausgebildeten, Materialabschnitt (25) umfasst, der mit der Luftsackhülle (17) verbunden ist, wobei insbesondere der zusätzliche Materialabschnitt (25) mit der Luftsackhülle (17) verklebt ist.

10. Luftsackanordnung nach Anspruch 9,
**dadurch gekennzeichnet,**
**dass** das zum Verkleben des zusätzlichen Materialabschnitts (25) mit der Luftsackhülle (17) vorgesehene Klebemittel gleichzeitig zumindest zum Teil die Dichtungsanordnung (21) bildet.

11. Luftsackanordnung nach einem der vorangehen Ansprüche,
**dadurch gekennzeichnet,**
**dass** zwischen dem Niederhalter (27) und dem die Öffnung (19) begrenzenden Randbereich der Luftsackhülle (17) wenigstens ein den Funktionsabschnitt (15) zumindest bereichsweise umgebendes Zwischenstück (29) angeordnet ist, wobei insbesondere das Zwischenstück (29) derart ausgebildet ist, dass eine Halte- und/oder Abstützwirkung des mittelbar über das Zwischenstück (29) mit dem Randbereich der Luftsackhülle (17) zusammenwirkenden Niederhalters (27) durch das Zwischenstück (29) vergrößert ist.

12. Luftsackanordnung nach einem der vorhergehenden Ansprüche,
**dadurch gekennzeichnet,**
**dass** der Funktionsabschnitt (15) des Gasgenerators (13) zumindest im Wesentlichen eine kreiszylindrische Grundform aufweist, und/oder dass die Öffnung (19) bezüglich des Funktionsabschnitts (15) unterdimensioniert ist.

13. Verfahren zur Herstellung einer ringförmigen Dichtungsanordnung an einer Hülle (17) eines Luftsacks (11) für Kraftfahrzeuge für eine Luftsackanordnung nach einem der vorhergehenden Ansprüche, bei dem in der Luftsackhülle (17) eine Primäröffnung ausgebildet wird,
**dadurch gekennzeichnet,**
**dass** im Bereich der Primäröffnung mit einem Klebemittel eine Verklebung (23) gebildet wird, und während der Bildung der Verklebung (23) oder innerhalb einer bestimmten Zeitspanne im Anschluss an die Bildung der Verklebung (23) aus dem Klebemittel eine ringwulstartige Dichtung (21) derart gebildet wird, dass eine von der ringförmigen Dichtung (21) begrenzte Öffnung (19) entsteht.

14. Verfahren nach Anspruch 13,
**dadurch gekennzeichnet,**
**dass** die Dichtung (21) aus einem zumindest nicht unmittelbar dem Verkleben dienenden Klebemittelüberschuss der Verklebung (23) gebildet wird.

## Claims

1. Air bag assembly for motor vehicles comprising:
at least one inflatable air bag (11) and
at least one gas generator (13) for inflating the air bag (11), wherein the gas generator (13) is arranged inside the air bag (11) and a functional section (15) extending from the gas generator, in particular an electrical connection section, sticks out from the air bag,
wherein an envelope (17) of the air bag (11) has an opening (19) through which the functional section (15) is fed to the outside, and
wherein the air bag envelope (17) comprises a sealing arrangement (21) in the edge area delimiting the opening (19) in addition to the material forming the air bag envelope (17) which seals the passage of the functional section (15) through the opening (19) of the air bag envelope (17),
**characterized in that**
at least one holding-down device (27) that can be coupled to the functional section (15) of the gas generator (13) is provided in such a manner that the sealing arrangement (21) is located in the axial direction of the functional section (15) between the gas generator (13) and the holding-down device (27) whereby the holding-down device holds the edge area of the air bag envelope (17) delimiting the opening (19) on the functional section (15) even under conditions prevailing during and after the inflation of the air bag (11), wherein in particular the holding-down device (27) can be slid or pushed onto the functional section (15) and is constructed in such a manner that the holding-down device (27) is secured in the slid-on or pushed-on state without additional auxiliary means against an unintentional removal from the functional section (15).

2. Airbag assembly according to claim 1,
**characterized in that**
the sealing arrangement (21) is constructed annularly.

3. Airbag assembly according to one of the previous claims,
**characterized in that**
the sealing arrangement (21) is constructed closely surrounding the functional section (15).

4. Airbag assembly according to one of the previous claims,
**characterized in that**
the sealing arrangement (21) exerts a radially inwardly directed force on the functional section (15) in particular over the entire circumference of the functional section (15).

5. Airbag assembly according to one of the previous claims,
**characterized in that**
the sealing arrangement (21) is elastically deformable.

6. Airbag assembly according to one of the previous claims,
**characterized in that**
the sealing arrangement (21) is formed by an adhesive, in particular silicon, that in addition forms an adhesion (23), wherein the sealing arrangement (21) and the adhesion (23) merge into one another, wherein in particular the sealing arrangement (21) is formed by an excess of adhesive that at least does not directly serve for the adhesion, wherein in particular the adhesive can be deformed in order to form the sealing arrangement (21) at least during the adhering procedure or within a certain time span following the adhering procedure.

7. Airbag assembly according to one of the previous claims,
**characterized in that**
the air bag envelope (17) comprises a stabilising apparatus (25) for the edge area in the edge area delimiting the opening (19) in addition to the material forming the air bag envelope (17), which apparatus imparts an increased strength and/or rigidity in particular to the edge area, wherein the edge area has an enlarged thickness in particular on account of the stabilizing apparatus (25).

8. Air bag assembly according to claim 7,
**characterized in that**
the stabilising apparatus (25) is formed at least in part by the sealing arrangement (21).

9. Air bag assembly according to claim 7 or 8,
**characterized in that**
the stabilising apparatus (25) comprises at least one additional material section (25) constructed in particular as an annular locking reinforcement, which section is connected to the air bag envelope (17), wherein in particular the additional material section (25) is adhered to the air bag envelope.

10. Air bag assembly according to claim 9,
**characterized in that**
the adhesive provided for adhering the additional material section (25) to the air bag envelope (17) simultaneously forms the sealing arrangement (21) at least partially.

11. Air bag assembly according to one of the previous claims,
**characterized in that**
at least one intermediate piece (29) surrounding the functional section (15) at least in sections is arranged between the holding-down device (27) and the edge area of the air bag envelope (17) which edge area delimits the opening (19), wherein in particular the intermediate piece (29) is constructed in such a manner that a holding- and/or supporting effect of the holding-down device (27) indirectly cooperating via the intermediate piece (29) with the edge area of the air bag envelope (17) is enlarged by the intermediate piece (29).

12. Air bag assembly according to one of the previous claims,
**characterized in that**
the functional section (15) of the gas generator (13) has at least substantially a circular cylindrical base form, and/or that the opening (19) is underdimensioned relative to the functioning section (15).

13. Method for producing an annular sealing arrangement on an envelope (17) of an air bag (11) from motor vehicles, for an air bag assembly according to one of the previous claims, in which a primary opening is formed in the air bag envelope (17),
**characterized in that**
an adhesion (23) is formed in the area of the primary opening with an adhesive, and during the formation of the adhesion (23) or within a certain time span following the formation of the adhesion (23) an annular bead-like seal (21) is formed from the adhesive in such a manner that an opening (19) delimited by the annular seal (21) is produced.

14. Method according to claim 13,
**characterized in that**
the seal (21) is formed from an excess of adhesive of the adhesion (23), which excess at least does not directly serve for the adhesion.

## Revendications

1. Ensemble de sac gonflable pour véhicules automobiles avec :
au moins un coussin d'air gonflable (11) et
au moins un générateur de gaz (13) pour gonfler le coussin d'air (11), le générateur de gaz (13) étant disposé à l'intérieur du coussin d'air (11), et une partie fonctionnelle (15) s'étendant depuis le générateur de gaz, en particulier une partie de raccordement électrique, de laquelle le coussin d'air (11) dépasse,
une enveloppe (17) du coussin d'air (11) présentant une ouverture (19),
à travers laquelle la partie fonctionnelle (15) est guidée vers l'extérieur, et
l'enveloppe (17) de coussin d'air comprenant dans la zone marginale limitant l'ouverture (19) en plus du matériau formant l'enveloppe (17) de coussin d'air un ensemble d'étanchéité (21), qui rend étanche le passage de la partie fonctionnelle (15) à travers l'ouverture (19) de l'enveloppe (17) de coussin d'air, **caractérisé en ce que**
au moins un dispositif de maintien (27) pouvant être couplé à la partie fonctionnelle (15) du générateur de gaz (13) est prévu de telle sorte que l'ensemble d'étanchéité (21) se trouve dans la direction axiale de la partie fonctionnelle (15) entre le générateur de gaz (13) et le dispositif de maintien (27), ce par quoi le dispositif de maintien maintient la zone marginale limitant l'ouverture (19) de l'enveloppe (17) de coussin d'air même dans des conditions régnant pendant et après le gonflage du coussin d'air (11), le dispositif de maintien (27) étant en particulier emboîtable ou enfilable sur la partie fonctionnelle (15) et formé de telle sorte que le dispositif de maintien (27) à l'état emboîté ou enfilé est protégé sans moyen supplémentaire contre un retrait involontaire de la partie fonctionnelle (15).

2. Ensemble de sac gonflable selon la revendication 1,
**caractérisé en ce que**
l'ensemble d'étanchéité (21) est formé de forme annulaire.

3. Ensemble de sac gonflable selon la revendication 1 ou 2,
**caractérisé en ce que**
l'ensemble d'étanchéité (21) est formé de façon entourant étroitement la partie fonctionnelle (15).

4. Ensemble de sac gonflable selon l'une des revendications précédentes,
**caractérisé en ce que**
l'ensemble d'étanchéité (21) exerce une force radiale dirigée vers l'intérieur sur la partie fonctionnelle (15), en particulier sur la totalité de la circonférence de la partie fonctionnelle (15).

5. Ensemble de sac gonflable selon l'une des revendications précédentes,
**caractérisé en ce que**
l'ensemble d'étanchéité (21) peut être déformé élastiquement.

6. Ensemble de sac gonflable selon l'une des revendications précédentes,
**caractérisé en ce que**
l'ensemble d'étanchéité (21) est formé à partir d'un adhésif, en particulier de la silicone, formant en outre un collage (23), l'ensemble d'étanchéité (21) et le collage (23) se fondant l'un dans l'autre, l'ensemble d'étanchéité (21) étant formé en particulier à partir d'un excès d'adhésif ne servant tout du moins pas directement au collage, l'adhésif pouvant être formé en particulier au moins pendant le procédé de collage ou pendant une période de temps déterminée à la suite du procédé de collage pour la formation de l'ensemble d'étanchéité (21).

7. Ensemble de sac gonflable selon l'une des revendications précédentes,
**caractérisé en ce que**
l'enveloppe (17) du coussin d'air dans la zone marginale limitant l'ouverture (19) comprend en plus du matériau formant l'enveloppe (17) de coussin d'air un dispositif de stabilisation (25) pour la zone marginale, qui offre en particulier à la zone marginale une résistance et/ou une rigidité plus élevées, la zone marginale présentant en particulier grâce au dispositif de stabilisation (25) une épaisseur accrue.

8. Ensemble de sac gonflable selon la revendication 7,
**caractérisé en ce que**
le dispositif de stabilisation (25) est formé au moins en partie par l'ensemble d'étanchéité (21).

9. Ensemble de sac gonflable selon la revendication 7 ou 8,
**caractérisé en ce que**
le dispositif de stabilisation comprend au moins une partie de matériau (25) supplémentaire, en particulier formée en tant que renfort de trou annulaire, qui est connectée à l'enveloppe (17) de coussin d'air, la partie de matériau (25) supplémentaire étant en particulier collée à l'enveloppe (17) de coussin d'air.

10. Ensemble de sac gonflable selon la revendication 9,
**caractérisé en ce que**
l'adhésif prévu pour le collage de la partie de matériau (25) supplémentaire avec l'enveloppe (17) de coussin d'air forme simultanément au moins en partie l'ensemble d'étanchéité (21).

11. Ensemble de sac gonflable selon l'une des revendications précédentes,
**caractérisé en ce que**
entre le dispositif de maintien (27) et la zone marginale de l'enveloppe (17) de coussin d'air limitant l'ouverture (19) est disposée au moins une pièce intermédiaire (29) entourant la partie fonctionnelle (15) au moins partiellement, la pièce intermédiaire (29) étant en particulier formée de telle sorte qu'un effet de maintien et/ou d'appui du dispositif de maintien (27) coopérant indirectement via la pièce intermédiaire (29) avec la zone marginale de l'enveloppe (17) de coussin d'air est accru par la pièce intermédiaire (29).

12. Ensemble de sac gonflable selon l'une des revendications précédentes,
**caractérisé en ce que**
la partie fonctionnelle (15) du générateur de gaz (13) présente au moins essentiellement une forme de base cylindrique circulaire, et/ou **en ce que** l'ouverture (19) est sous-dimensionnée par rapport à la partie fonctionnelle (15).

13. Procédé de fabrication d'un ensemble d'étanchéité de forme annulaire sur une enveloppe (17) d'un coussin d'air (11) pour véhicules automobiles pour un ensemble de sac gonflable selon l'une des revendications précédentes, dans lequel une ouverture primaire est formée dans l'enveloppe (17) de coussin d'air,
**caractérisé en ce que**
dans la zone de l'ouverture primaire un collage (23) est formé avec un adhésif, et pendant la formation du collage (23) ou pendant une période de temps déterminée à la suite de la formation du collage (23) un joint (21) de type tore est formé à partir de l'adhésif de sorte qu'une ouverture (19) limitée par le joint (21) de forme annulaire est générée.

14. Procédé selon la revendication 13,
**caractérisé en ce que**
le joint (21) est formé à partir d'un excès d'adhésif du collage (23) ne servant tout du moins pas directement au collage.
